# EUROPÄISCHE PATENTSCHRIFT

(11) **EP 2 998 028 B1**
(45) Veröffentlichungstag und Bekanntmachung des Hinweises auf die Patenterteilung: **10.05.2017**
(21) Anmeldenummer: 15002280.4
(22) Anmeldetag: 31.07.2015
(51) Int. Cl.: B04B 11/00, B29B 13/06

(54) **EINLAUFKRÜMMER MIT BOGENSIEB**
INLET BENDER WITH CURVED SCREEN
COLLECTEUR D'ENTREE DOTE D'UN FILTRE INFERIEUR

(30) Priorität: 16.09.2014 DE 102014013438
(43) Veröffentlichungstag der Anmeldung: 23.03.2016
(73) Patentinhaber: Siebtechnik GMBH, 45478 Mülheim an der Ruhr (DE)
(72) Erfinder: Dietschreit, Horst, 45479 Mülheim an der Ruhr (DE)
(74) Vertreter: Patentanwaltskanzlei Methling

(56) Entgegenhaltungen:
- EP-A1- 0 620 963
- EP-A1- 0 627 288
- EP-A2- 0 058 398
- AT-B- 138 407
- GB-A- 1 213 071
- US-A- 3 045 359
- US-A- 3 868 326
- US-A1- 2012 024 760

## Beschreibung

Die Erfindung betrifft eine Siebzentrifuge mit zumindest einem Einlaufkrümmer, der einem Zulauf der Siebzentrifuge vorgeschaltet ist, wobei der Einlaufkrümmer einen Bogen aufweist sowie ein Verfahren zur Entwässerung eines feuchten Granulates, insbesondere eines feuchten Kunststoffgranulates, insbesondere mittels einer Siebzentrifuge,

Derartige Siebzentrifugen und Verfahren zur Entwässerung eines feuchten Granulates sind bekannt. Dabei wird über einen Einlaufkrümmer das aufzubereitende Gut beispielsweise einer Siebzentrifuge zugeführt, in weicher die Entwässerung des feuchten Granulates durchgeführt wird. Die Leistung der Siebzentrifuge wird dabei beschränkt durch die Wasserbeladung des feuchten Gutes.

Aus der US 3 868 326 A ist eine Siebzentrifuge mit einem bogenförmigen Einlassrohr bekannt.

Die Aufgabe der Erfindung ist es, eine Siebzentrifuge, sowie ein Verfahren zur Entwässerung eines feuchten Granulates anzugeben, welches verbesserte Leistungseigenschaften aufweist.

Diese Aufgabe wird erfindungsgemäß durch eine Siebzentrifuge gemäß Anspruch 1 sowie ein Verfahren gemäß Anspruch 12 gelöst. Vorteilhafte Weiterbildungen der Erfindung sind in den Unteransprüchen angegeben.

Besonders vorteilhaft bei dem Einlaufkrümmers, ist es, dass der Einlaufkrümmer einen Bogen aufweist, in welchem zu transportierendes Gut umgelenkt wird und wobei der Bogen ein Bogensieb aufweist, über welches Flüssigkeit aus dem Gut entzogen und abgeführt wird. Die Flüssigkeit kann somit separat abgeführt werden.

Mit dem Begriff des Gutes ist dabei insbesondere ein Granulat wie ein Kunststoffgranulat umfasst.

Besonders vorteilhaft ist dabei, dass über den Einlaufkrümmer mit einem Bogensieb, über welches dem zur weiteren Entwässerung einer Siebzentrifuge zuzuführendes Gut geleitet wird, eine Vortrocknung des feuchten Granulates vor der Weiterleitung zur weiteren Entwässerung erfolgt. Dadurch, dass ein nennenswerter Anteil von Flüssigkeit dem zu entwässernden Granulat im Rahmen einer Vortrocknung mittels des Einlaufkrümmers entzogen wird, wird die Leistung der gegebenenfalls nachgeschalteten Siebzentrifuge erheblich gesteigert. Mit dem Begriff der Entwässerung ist dabei jegliche Form des Entzugs von Flüssigkeit gemeint, wobei diese nicht auf Wasser beschränkt ist. Vielmehr kann es sich auch um eine beliebige andere Flüssigkeit oder ein Gemisch enthaltend Wasser und beispielsweise Lösungsmittel oder dergleichen handeln.

Vorzugsweise ist der Einlaufkrümmer gegenüber der Umgebung gasdicht. Vorzugsweise ist das Bogensieb durch ein Sieb gebildet, welches in seiner Kontur dem Bogen des Einlaufkrümmers entspricht.

In dem Bereich des Einlaufkrümmers in welchem das zu transportierende Gut umgelenkt wird, kann dementsprechend mittels des Bogensiebs Flüssigkeit entzogen und aus dem zu entwässernden feuchten Granulat abgeführt werden.

Vorzugsweise weist das Bogensieb eine Mehrzahl von Durchtrittsöffnungen auf, durch die Flüssigkeit aus dem Gut abgeführt wird. Dabei kann das Bogensieb als Metallsieb oder als Kunststoffsieb, insbesondere aus Polyurethan, ausgebildet sein. Insbesondere kann das Bogensieb als Lochblech und/oder Spaltsieb und/oder Drahtgewebe ausgebildet sein.

Insbesondere kann ein derartiger Einlaufkrümmers zur Vortrocknung eines Granulates mit einer Korngröße von größer oder gleich 0,2 mm, insbesondere größer oder gleich 0,5 mm, insbesondere größer oder gleich 2 mm, insbesondere größer oder gleich 3 mm, insbesondere größer oder gleich 4 mm zum Einsatz kommen. Dementsprechend sind die Durchtrittsöffnungen des als Lochblech und/oder Spaltsieb und/oder Drahtgewebe ausgebildeten Bogensiebs dimensioniert. Demzufolge haben die Durchtrittsöffnungen ein Maß von kleiner oder gleich 4 mm, insbesondere kleiner oder gleich 3 mm, insbesondere kleiner oder gleich 2 mm, insbesondere kleiner oder gleich 1,5 mm, insbesondere kleiner oder gleich 1 mm, insbesondere kleiner oder gleich 0,5 mm, insbesondere kleiner oder gleich 0,2 mm.

Ein als Drahtgewebe ausgebildetes Bogensieb kann somit eine Maschenweite von 0,2 mm oder 0,5 mm oder 1,0 mm oder 1,5 mm oder 2,0 mm oder 3 mm oder 4 mm aufweisen. Ferner kann das Bogensieb als Kunststoffsieb, insbesondere aus Polyurethan ausgebildet sein.

Vorzugsweise weist das Bogensieb mehrere parallel in Strömungsrichtung und/oder mehrere unter einem Winkel zur Strömungsrichtung stehende und/oder mehrere senkrecht zur Strömungsrichtung verlaufende Durchtrittsöffnungen nebeneinander auf, insbesondere über die ganze Breite des Bogensiebs oder nahezu die ganze Breite des Bogensiebs und/oder über Seitenwände des Bogensiebs. Diese Durchtrittsöffnungen können somit schlitzförmig ausgestaltet sein, wobei die Schlitze parallel zur Strömungsrichtung verlaufen. Alternativ oder kumulativ können schlitzförmige Durchtrittsöffnungen auch unter einem Winkel zur Strömungsrichtung und/oder senkrecht zur Strömungsrichtung stehen. Es können somit schlitzförmige Durchtrittsöffnungen parallel zur Strömungsrichtung und/oder unter einem Winkel zur Strömungsrichtung und/oder senkrecht zur Strömungsrichtung angeordnet sein. Ferner können schlitzförmige Durchtrittsöffnungen V-förmig angeordnet sein. Parallel zueinander verlaufende schlitzförmige Durchtrittsöffnungen können ferner versetzt zueinander angeordnet sein.

Bei solchen mehreren parallel und/oder unter einem Winkel und/oder senkrecht zur Strömungsrichtung verlaufenden Durchtrittsöffnungen ist somit das Bogensieb als Spaltsieb ausgebildet mit mehreren schlitzförmigen Spalten parallel und/oder unter einem Winkel und/oder senkrecht zur Strömungsrichtung des zu transportierenden Gutes. Zur Erhöhung der Wirksamkeit des Bogensiebs können dabei die schlitzförmigen Spalte über die ganze Breite des Bogensiebs oder nahezu die ganze Breite des Bogensiebs und/oder über Seitenwände des Bogensiebs angeordnet sein.

Mit dem Begriff der Breite des Bogensiebs ist die Erstreckung des Bogensieb senkrecht zur Durchströmungsrichtung des Bogens gemeint, d.h. die Breite der senkrechten Projektion des Strömungskanals in dem Einlaufkrümmer.

Alternativ oder kumulativ können die Seitenwände des Bogens perforiert sein. Hierdurch kann über die Seitenwände des Bogens Flüssigkeit abgezogen und abgeführt werden.

Bei einer besonders bevorzugten Ausführungsform weist das Bogensieb mehrere Abschnitte von parallel in Strömungsrichtung und/oder unter einem Winkel zur Strömungsrichtung und/oder senkrecht zur Strömungsrichtung verlaufenden Durchtrittsöffnungen auf, wobei mehrere Abschnitte in Strömungsrichtung hintereinander angeordnet sind.

Dementsprechend ist das Bogensieb in diesem Fall als Spaltsieb ausgebildet, wobei mehrere Spaltsiebabschnitte in Strömungsrichtung aufeinander folgen und die einzelnen schlitzförmige Durchtrittsöffnungen parallel zur Strömungsrichtung und/oder unter einem Winkel zur Strömungsrichtung und/oder senkrecht zur Strömungsrichtung angeordnet sind.

Alternativ oder kumulativ weist das Bogensieb mehrere parallel in Strömungsrichtung und/oder unter einem Winkel zur Strömungsrichtung und/oder senkrecht zur Strömungsrichtung verlaufenden Durchtrittsöffnungen auf, die versetzt zueinander angeordnet sind. Ferner können schlitzförmige Durchtrittsöffnungen V-förmig zueinander angeordnet sein.

Die Öffnungsbreite der Spalte ist dabei abgestimmt auf die Korngröße des zu entwässernden Granulates, d.h. die Spaltweite hat ein Maß von insbesondere kleiner oder gleich 4 mm, insbesondere kleiner oder gleich 3 mm, insbesondere kleiner oder gleich 2 mm, insbesondere kleiner oder gleich 1,5 mm, insbesondere kleiner oder gleich 1 mm, insbesondere kleiner oder gleich 0,5 mm, insbesondere kleiner oder gleich 0,2 mm.

Bevorzugt weist der Einlaufkrümmer einen ersten Ablauf zur Ableitung des über das Bogensieb vorgetrockneten Gutes auf, insbesondere zur Ableitung in einen Zulauf einer Siebzentrifuge.

Vorzugsweise weist der Einlaufkrümmer einen zweiten Ablauf zur Ableitung der mittels des Bogensiebs aus dem feuchten Gut entzogenen Flüssigkeit auf.

Dementsprechend weist der Einlaufkrümmer vorzugsweise zwei Abläufe zur getrennten Ableitung zum einen des vorgetrockneten Gutes beispielsweise in den Zulauf einer nachgeschalteten Siebzentrifuge, sowie einen zweiten Ablauf zur Ableitung der dem zu entwässernden Gut entzogenen Flüssigkeit auf.

Mittels einer solchen Siebzentrifuge kann das vorgetrocknete Granulat einer weiteren Entwässerung unterzogen werden. Aufgrund der Vorschaltung des Einlaufkrümmers und der Vortrocknung des zu entwässernden feuchten Granulates ist die Leistung der Siebzentrifuge zur Entwässerung des feuchten Granulates deutlich gesteigert.

Dadurch, dass das zu entwässernde feuchte Granulat mittels des Einlaufkrümmers vorgetrocknet wird, ist wie erläutert die Leistungsfähigkeit der Siebzentrifuge deutlich gesteigert.

Besonders vorteilhaft bei dem Verfahren zur Entwässerung eines feuchten Granulates, insbesondere eines feuchten Kunststoffgranulates, insbesondere mittels einer Siebzentrifuge ist es, dass das feuchte Granulat durch einen Einlaufkrümmers geleitet wird, der einen Bogen mit einem Bogensieb aufweist, über welches Flüssigkeit aus dem feuchten Granulat entzogen und abgeführt wird.

Bei dem zu entwässernden Granulat kann es sich beispielsweise um Nylon, Polyester, Polypropylen oder Perlpolystyrol handeln, Die Anwendung der Erfindung ist jedoch hierauf nicht beschränkt. Dabei kann das Granulat beispielsweise eine Korngröße von größer oder gleich 0,2 mm, insbesondere größer oder gleich 0,5 mm, insbesondere größer oder gleich 2 mm oder größer oder gleich 3 mm oder größer oder gleich 4 mm aufweisen.

Bei einer bevorzugten Ausführungsform des Verfahrens zur Entwässerung eines feuchten Granulates wird das feuchte Granulat, nachdem es durch den Einlaufkrümmer geleitet und einer Vortrocknung unterzogen wurde, einer Siebzentrifuge zugeführt und in der Siebzentrifuge entwässert.

Mit dem Begriff der Entwässerung ist dabei der Entzug jedweder Flüssigkeit umfasst und die Anwendung ist nicht auf den Entzug von Wasser beschränkt. Vielmehr kann das erfindungsgemäße Verfahren zum Entzug jeglicher Flüssigkeit aus einem feuchten Granulat angewendet werden, insbesondere auch Gemischen von Wasser mit Lösungsmittel.

Mit dem Begriff der Entwässerung ist dabei insbesondere eine vollständige Trocknung des Granulates umfasst, das heißt der vollständige Entzug der in dem ursprünglich feuchten Granulat enthaltenden Flüssigkeit. Es ist aber ebenso mit diesem Begriff umfasst, dass dem zu entwässernden feuchten Granulat ein Anteil der Flüssigkeit entzogen wird, wobei ein Restgehalt an Flüssigkeit insbesondere in Form einer Oberflächenfeuchte an den einzelnen Granulatpartikeln nach der Durchführung des Verfahrens erhalten bleiben kann.

Ein Ausführungsbeispiel der Erfindung ist in den Figuren dargestellt und wird nachfolgend näher erläutert. Es zeigen:

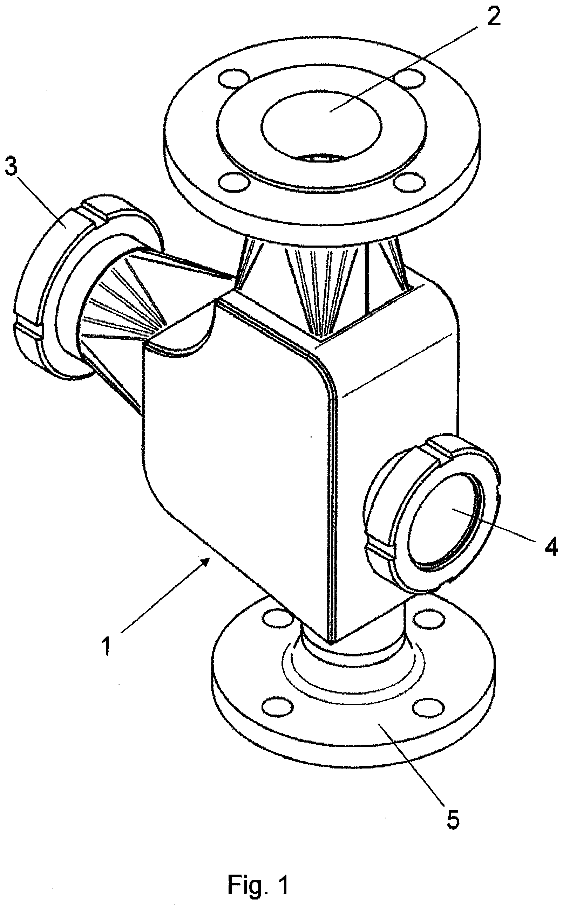

- Fig. 1: eine perspektivische Ansicht eines Einlaufkrümmers;

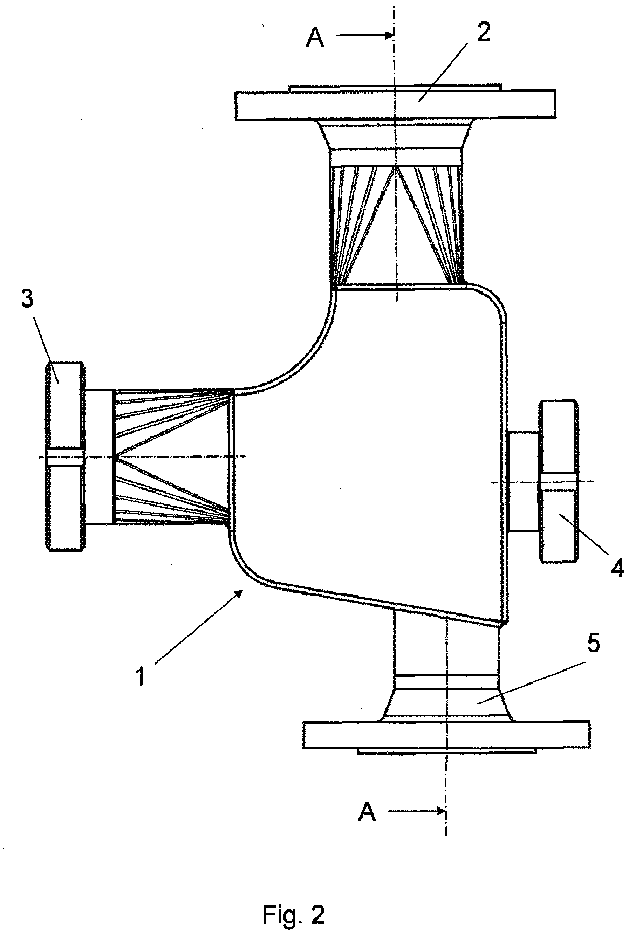

- Fig. 2: die Seitenansicht des Einlaufkrümmers nach Fig. 1;
- Fig. 3: den Schnitt A - A nach Fig. 2;
- Fig. 4: die Vorderansicht des Einlaufkrümmers;
- Fig. 5: den Schnitt B - B nach Fig. 5.

Die Figuren zeigen ein Ausführungsbeispiel eines Einlaufkrümmers 1 mit einem Zulauf 2, über welchen das zu entwässernde Granulat dem Einlaufkrümmer zugeführt wird. Innerhalb des Einlaufkrümmers wird die Strömungsrichtung des Granulates um 90° umgelenkt.

Das mittels des Einlaufkrümmers vorgetrocknete Granulat wird über den ersten Ablauf 3 einer nachgeschaltenten, nicht dargestellten Siebzentrifuge zugeführt. Innerhalb des Einlaufkrümmers 1 erfolgt somit eine Umlenkung der Strömungsrichtung des zu entwässernden Granulates um 90°.

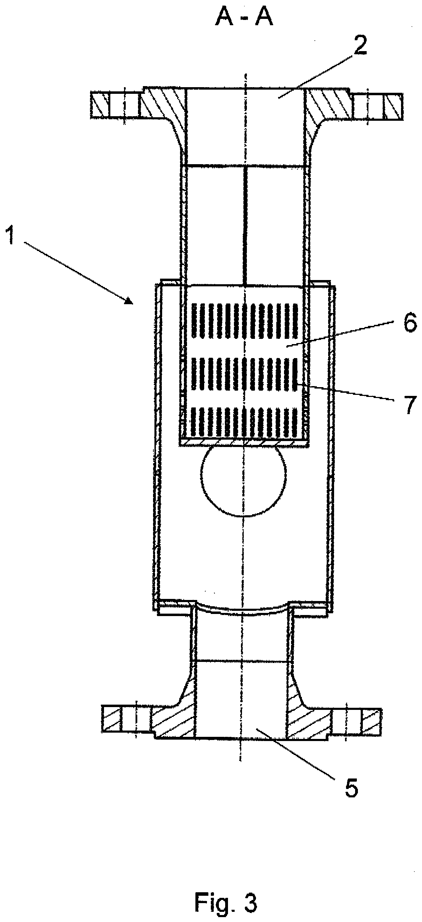

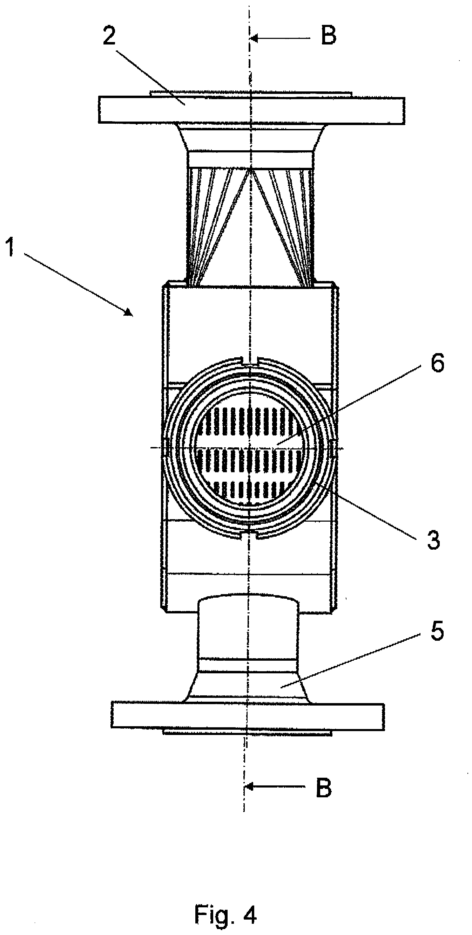

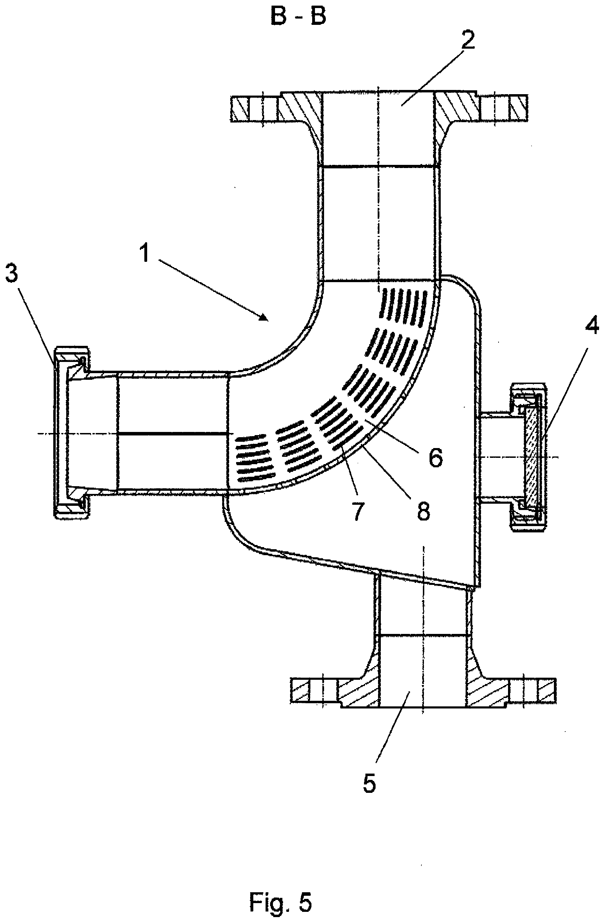

Erkennbar ist in den Darstellungen, dass im Bogen 8 des Krümmers angeordnete Bogensieb 6 mit einer Vielzahl schlitzförmiger Durchtrittsöffnungen 7, die über die gesamte Breite des Bogensiebs 6 parallel zueinander verlaufend angeordnet sind, wobei mehrere Abschnitte parallel angeordneter schlitzförmiger Durchtrittsöffnungen in Strömungsrichtungen hintereinander angeordnet sind, wie dies in den Figuren 3, 4 und 5 erkennbar ist. Wie Fig. 5 zu entnehmen ist, erstreckt sich das als Spaltsieb ausgebildete Bogensieb über den gesamten Bogenbereich 8 des Krümmers.

An seiner Unterseite verfügt der Einlaufkrümmer 1 über einen zweiten Ablauf 5, über welchen die mittels des Einlaufkrümmers 1 dem zu entwässernden Granulat entzogene Flüssigkeit abgeführt wird. Der zweite Ablauf 5 ist gleichzeitig als Montageflansch zur Befestigung des Einlaufkrümmers 1 an einer Rohrleitung ausgebildet.

Auf seiner Rückseite weist der Einlaufkrümmer 1 ein Schauglas 4 auf.

Zulauf 2, erster Ablauf 3 sowie zweiter Ablauf 5 weisen jeweils einen Flansch zur Montage entsprechender Rohranschlüsse auf.

Nicht dargestellt in den Figuren ist die dem ersten Ablauf 3 nachgeschaltete Siebzentrifuge zur weiteren Entwässerung des mittels des Einlaufkrümmers 1 vorgetrockneten Granulates.

Durch die Vortrocknung des feuchten Granulates mittels des Einlaufkrümmers 1 wird die Schleuderleistung der Siebzentrifuge, welche durch die Flüssigkeitsmenge limitiert ist, deutlich gesteigert.

Dabei wird das feuchte Granulat mittels einer Pumpe gefördert und dem Einlaufkrümmer mit einem Überdruck gegenüber dem Umgebungsdruck zugeführt.

Durch diesen Überdruck innerhalb des Einlaufkrümmers gegenüber dem Umgebungsdruck wird die Vortrocknung des feuchten Granulats in dem Einlaufkrümmer verbessert Der Überdruck am Einlass des Einlaufkrümmers gegenüber dem Umgebungsdruck kann dabei bis zu 2 bar, insbesondere bis zu 3 bar oder bis zu 4 bar betragen.

## Patentansprüche

1. Siebzentrifuge mit zumindest einem Einlaufkrümmer (1), der einem Zulauf der Siebzentrifuge vorgeschaltet ist, wobei der Einlaufkrümmer (1) einen Bogen (8) aufweist, in welchem zu transportierendes Gut umgelenkt wird, **dadurch gekennzeichnet, dass** der Bogen (8) ein Bogensieb (6) aufweist, über welches Flüssigkeit aus dem Gut entzogen und abgeführt wird und wobei über den Einlaufkrümmer (1) zu trocknendes feuchtes Gut vorgetrocknet der Siebzentrifuge zugeführt wird.

2. Siebzentrifuge nach Anspruch 1, **dadurch gekennzeichnet, dass** der Einlaufkrümmer (1) gegenüber der Umgebung gasdicht ist.

3. Siebzentrifuge nach Anspruch 1 oder 2, **dadurch gekennzeichnet, dass** das Bogensieb (6) durch ein Sieb gebildet ist, welches in seiner Kontur dem Bogen (8) des Einlaufkrümmers (1) entspricht.

4. Siebzentrifuge nach einem der vorherigen Ansprüche, **dadurch gekennzeichnet, dass** das Bogensieb (6) eine Mehrzahl von Durchtrittsöffnungen (7) aufweist, durch die Flüssigkeit aus dem Gut abgeführt wird.

5. Siebzentrifuge nach einem der vorherigen Ansprüche, dadurch gekenntzeichnet, dass das Bogensieb (6) als Lochblech und/oder Spaltsieb und/oder Drahtgewebe und/oder Kunststoffsieb, insbesondere aus Polyurethan, ausgebildet ist.

6. Siebzentrifuge nach einem der vorherigen Ansprüche, **dadurch gekennzeichnet, dass** das Bogensieb (6) mehrere parallel in Strömungsrichtung verlaufende und/oder mehrere unter einem Winkel zur Strömungsrichtung stehende und/oder mehrere senkrecht zur Strömungsrichtung verlaufende Durchtrittsöffnungen (7) aufweist, insbesondere über die ganze Breite des Bogensiebs (6) oder nahezu die ganze Breite des Bogensiebs (6) und/oder über Seitenwände des Bogensiebs (6).

7. Siebzentrifuge nach einem der vorherigen Ansprüche, **dadurch gekennzeichnet, dass** das Bogensieb (6) mehrere Abschnitte von parallel in Strömungsrichtung und/oder unter einem Winkel zur Strömungsrichtung und/oder senkrecht zur Strömungsrichtung verlaufenden Durchtrittsöffnungen (7) aufweist, wobei die Abschnitte in Strömungsrichtung hintereinander angeordnet sind.

8. Siebzentrifuge nach einem der vorherigen Ansprüche, **dadurch gekennzeichnet, dass** das Bogensieb (6) mehrere parallel in Strömungsrichtung und/oder unter einem Winkel zur Stromungsrichtung und/oder senkrecht zur Strömungsrichtung verlaufenden Durchtrittsöffnungen (7) aufweist, die versetzt und/oder V-förmig zueinander angeordnet sind.

9. Siebzentrifuge nach einem der vorherigen Ansprüche, **dadurch gekennzeichnet, dass** der Einlaufkrümmer (1) einen Zulauf (2) aufweist, insbesondere dass der Zulauf (2) einen Flansch aufweist.

10. Siebzentrifuge nach einem der vorherigen Ansprüche, **dadurch gekennzeichnet, dass** der Einlaufkrümmer (1) einen ersten Ablauf (3) zur Ableitung des über das Bogensieb (6) vorgetrockneten Gutes aufweist, insbesondere zur Ableitung in einen Zulauf einer Siebzentrifuge.

11. Siebzentrifuge nach einem der vorherigen Ansprüche, **dadurch gekennzeichnet, dass** der Einlaufkrümmer (1) einen zweiten Ablauf (5) zur Ableitung der mittels des Bogensiebs (6) aus dem feuchten Gut entzogenen Flüssigkeit aufweist.

12. Verfahren zur Entwässerung eines feuchten Granulates, insbesondere eines feuchten Kunststoffgranulates, insbesondere mittels einer Siebzentrifuge, **dadurch gekennzeichnet, dass** das feuchte Granulat durch einen Einlaufkrümmer (1) geleitet wird, der einen Bogen (8) mit einem Bogensieb (6) aufweist, über weiches Flüssigkeit aus dem feuchten Granulat entzogen und abgeführt wird.

13. Verfahren nach Anspruch 12, **dadurch gekennzeichnet, dass** das feuchte Granulat, nachdem es durch den Einlaufkrümmer (1) geleitet und einer Vortrocknung unterzogen wurde, einer Siebzentrifuge zugeführt und in der Siebzentrifuge entwässert wird.

14. Verfahren nach Anspruch 12 oder 13, **dadurch gekennzeichnet, dass** das feuchte Granulat mittels einer Pumpe gefördert und dem Einlaufkrümmer mit einem Überdruck gegenüber dem Umgebungsdruck zugeführt wird.

## Claims

1. Screen centrifuge with at least one inlet elbow (1), which is upstream of an inlet of the screen centrifuge, wherein the inlet elbow (1) has a bend (8), in which material to be transported is diverted, **characterised in that** the bend (8) has a curved screen (6), by way of which liquid is removed from the material and discharged and wherein moist material that is to be dried is fed, pre-dried, to the screen centrifuge by way of the inlet elbow (1).

2. Screen centrifuge according to claim 1, **characterised in that** the inlet elbow (1) is gas-tight in relation to the environment.

3. Screen centrifuge according to claim 1 or 2, **characterised in that** the curved screen (6) is formed by a screen, which in its contour matches the bend (8) of the inlet elbow (1).

4. Screen centrifuge according to one of the preceding claims, **characterised in that** the curved screen (6) has a plurality of through openings (7), through which liquid from the material is discharged.

5. Screen centrifuge according to one of the preceding claims, **characterised in that** the curved screen (6) is formed as perforated plate and/or wedge-wire screen and/or wire cloth and/or plastic screen, especially of polyurethane.

6. Screen centrifuge according to one of the preceding claims, **characterised in that** the curved screen (6) has several through openings (7) running in parallel in the direction of flow and/or several at an angle to the direction of flow and/or several running perpendicularly to the direction of flow, particularly across the entire width of the curved screen (6) or almost the entire width of the curved screen (6) and/or over side walls of the curved screen (6).

7. Screen centrifuge according to one of the preceding claims, **characterised in that** the curved screen (6) has several sections of through openings (7) running in parallel in the direction of flow and/or at an angle to the direction of flow and/or perpendicularly to the direction of flow, wherein the sections are disposed one behind the other in the direction of flow.

8. Screen centrifuge according to one of the preceding claims, **characterised in that** the curved screen (6) has several through openings (7) running in parallel in the direction of flow and/or at an angle to the direction of flow and/or perpendicularly to the direction of flow, which are disposed in an offset and/or V-shaped pattern in relation to each other.

9. Screen centrifuge according to one of the preceding claims, **characterised in that** the inlet elbow (1) has an inlet (2), particularly that the inlet (2) has a flange.

10. Screen centrifuge according to one of the preceding claims, **characterised in that** the inlet elbow (1) has a first outlet (3) to convey away the material pre-dried by way of the curved screen (6), particularly to convey it away into an inlet of a screen centrifuge.

11. Screen centrifuge according to one of the preceding claims, **characterised in that** the inlet elbow (1) has a second outlet (5) to convey away the liquid removed from the moist material by means of the curved screen (6).

12. Method for dewatering moist granules, particularly moist polymer granules, particularly by means of a screen centrifuge, **characterised in that** the moist granules are channelled through an inlet elbow (1) having a bend (8) with a curved screen (6), by way of which liquid is removed from the moist granules and discharged.

13. Method according to claim 12, **characterised in that** the moist granules, after having been channelled through the inlet elbow (1) and put through pre-drying, are fed into a screen centrifuge and are dewatered in the screen centrifuge.

14. Method according to claim 12 or 13, **characterised in that** the moist granules are conveyed by means of a pump and are fed to the inlet elbow with a pressure that is above the ambient pressure.

## Revendications

1. Centrifugeuse à tamis avec au moins un collecteur d'entrée (1) qui est monté en amont d'une amenée de la centrifugeuse à tamis, dans laquelle le collecteur d'entrée (1) présente un arc (8), dans lequel de la marchandise à transporter est déviée, **caractérisée en ce que** l'arc (8) présente un tamis en arc (6), par le biais duquel du liquide est retiré et évacué de la marchandise, et dans laquelle une marchandise humide à sécher par le biais du collecteur d'entrée (1) est amenée préséchée à la centrifugeuse à tamis.

2. Centrifugeuse à tamis selon la revendication 1, **caractérisée en ce que** le collecteur d'entrée (1) est étanche au gaz par rapport à l'environnement.

3. Centrifugeuse à tamis selon la revendication 1 ou 2, **caractérisée en ce que** le tamis en arc (6) est formé par un tamis, dont le contour correspond à l'arc (8) du collecteur d'entrée (1).

4. Centrifugeuse à tamis selon l'une des revendications précédentes, **caractérisée en ce que** le tamis en arc (6) présente une pluralité d'ouvertures de passage (7), par lesquelles du liquide est évacué de la marchandise.

5. Centrifugeuse à tamis selon l'une des revendications précédentes, **caractérisée en ce que** le tamis en arc (6) est réalisé comme tôle percée et/ou tamis à fente et/ou tissu métallique et/ou tamis en matière plastique, en particulier en polyuréthane.

6. Centrifugeuse à tamis selon l'une des revendications précédentes, **caractérisée en ce que** le tamis en arc (6) présente plusieurs ouvertures de passage (7) s'étendant parallèlement dans le sens d'écoulement et/ou plusieurs se trouvant selon un angle par rapport au sens d'écoulement et/ou plusieurs s'étendant perpendiculairement au sens d'écoulement, en particulier sur la largeur entière du tamis en arc (6) ou presque la largeur entière du tamis en arc (6) et/ou sur des parois latérales du tamis en arc (6).

7. Centrifugeuse à tamis selon l'une des revendications précédentes, **caractérisée en ce que** le tamis en arc (6) présente plusieurs sections d'ouvertures de passage (7) s'étendant parallèlement dans le sens d'écoulement et/ou selon un angle par rapport au sens d'écoulement et/ou perpendiculairement au sens d'écoulement, dans laquelle les sections sont agencées dans le sens d'écoulement les unes derrière les autres.

8. Centrifugeuse à tamis selon l'une des revendications précédentes, **caractérisée en ce que** le tamis en arc (6) présente plusieurs ouvertures de passage (7) s'étendant parallèlement dans le sens d'écoulement et/ou selon un angle par rapport au sens d'écoulement et/ou perpendiculairement au sens d'écoulement qui sont agencées en déport et/ou en forme de V les unes par rapport aux autres.

9. Centrifugeuse à tamis selon l'une des revendications précédentes, **caractérisée en ce que** le collecteur d'entrée (1) présente une amenée (2), en particulier **en ce que** l'amenée (2) présente une bride.

10. Centrifugeuse à tamis selon l'une des revendications précédentes, **caractérisée en ce que** le collecteur d'entrée (1) présente une première évacuation (3) pour la dérivation de la marchandise préséchée par le biais du tamis en arc (6), en particulier pour la dérivation dans une amenée d'une centrifugeuse à tamis.

11. Centrifugeuse à tamis selon l'une des revendications précédentes, **caractérisée en ce que** le collecteur d'entrée (1) présente une seconde évacuation (5) pour la dérivation du liquide retiré au moyen du tamis en arc (6) de la marchandise humide.

12. Procédé d'assèchement d'un granulat humide, en particulier un granulat plastique humide, en particulier au moyen d'une centrifugeuse à tamis, **caractérisé en ce que** le granulat humide est conduit par un collecteur d'entrée (1) qui présente un arc (8) avec un tamis en arc (6), par le biais duquel du liquide est retiré et évacué du granulat humide.

13. Procédé selon la revendication 12, **caractérisé en ce que** le granulat humide est amené à une centrifugeuse à tamis et est asséché dans la centrifugeuse à tamis après qu'il a été conduit par le collecteur d'entrée (1) et soumis à un préséchage.

14. Procédé selon la revendication 12 ou 13, **caractérisé en ce que** le granulat humide est transporté au moyen d'une pompe et est amené au collecteur d'entrée avec une surpression par rapport à la pression ambiante.
